# EUROPÄISCHE PATENTSCHRIFT

(11) **EP 0 932 526 B1**
(45) Veröffentlichungstag und Bekanntmachung des Hinweises auf die Patenterteilung: **09.05.2001**
(21) Anmeldenummer: 97948686.7
(22) Anmeldetag: 20.10.1997
(51) Int. Cl.: B60R 21/20

(54) **VERFAHREN ZUR SICHERUNG EINES FAHRZEUGINSASSEN UND AIRBAGMODUL ZUR DURCHFÜHRUNG DES VERFAHRENS**
VEHICLE PASSENGER SAFETY METHOD AND AIR BAG MODULE FOR THE IMPLEMENTATION THEREOF
PROCEDE POUR ASSURER LA SECURITE D'UN PASSAGER DANS UN VEHICULE ET MODULE AIRBAG POUR LA MISE EN OEUVRE DE CE PROCEDE

(30) Priorität: 22.10.1996 DE 19645373
(43) Veröffentlichungstag der Anmeldung: 04.08.1999
(73) Patentinhaber: Petri AG, 63743 Aschaffenburg (DE)
(72) Erfinder: ADOMEIT, Heinz-Dieter, D-10623 Berlin (DE); MAROTZKE, Thomas, D-16562 Bergfelde (DE)
(74) Vertreter: Bärmann, Klaus, Dipl.-Ing.
(86) Internationale Anmeldenummer: DE9702516
(87) Internationale Veröffentlichungsnummer: WO9817506

(56) Entgegenhaltungen:
- DE-C- 4 430 588
- US-A- 5 234 229
- US-A- 5 383 682
- PATENT ABSTRACTS OF JAPAN vol. 016, no. 467 (M-1317), 29.September 1992 & JP 04 166458 A (TOYODA GOSEI CO LTD), 12.Juni 1992,
- PATENT ABSTRACTS OF JAPAN vol. 016, no. 405 (M-1301), 26.August 1992 & JP 04 135944 A (IKEDA BUSSAN CO LTD), 11.Mai 1992,

## Beschreibung

Die Erfindung betrifft ein Airbagmodul nach dem Oberbegriff des Anspruchs 1.

Bei einer Position des Insassen sehr nahe der Abdeckung des Gassackes eines Airbagmoduls, die auch als out off position (Oop) bezeichnet wird, können die sich öffnende Airbagkappe und der sich entfaltende Gassack dem Insassen erhebliche Verletzungen zufügen. Der Insasse wird in dieser Position durch den sich entfaltenden Gassack angeschossen, während er bei einer normalen Sitzhaltung den Gassack erst berührt, nachdem sich dieser entfaltet hat. Eine besonders gefährliche Situation tritt für den Insassen dann ein, wenn er vor der Entfaltung des Gassackes sehr nahe dem Airbagmodul bzw. mit dem Kopf oder mit der Brust auf der Gassackabdeckung aufliegt. Für die Beifahrerseite bestehen zusätzliche Gefahren durch mögliche falsche Sitzpositionen des Insassen zum Airbagmodul.

Zur Reduzierung dieser Gefahren sind bereits Airbagmodule bekannt, bei denen mindestens ein Bauteil während der Entfaltung des Gassacks vom Insassen weg verschoben wird. So ist aus der DE 44 30 588 C1 ein Gassack-System für Kraftfahrzeuge bekannt, bei dem das Gassacksystem mindestens zum Teil vom Fahrzeuginsassen wegbewegbar am Kraftfahrzeug befestigt ist. Für das Wegbewegen des Airbagmoduls werden die bei der Airbagfunktion auftretenden Reaktionskräfte genutzt. Das Gassack-System ist dabei an Elementen befestigt, die unter der Wirkung der austretenden Gase plastisch oder elastisch verformbar sind. Bei diesem Gassack-System wird auch die Gassackabdeckung zusammen mit den übrigen Baugruppen, wie Gasgenerator, Diffusor und Gassack vom Insassen wegbewegt.

Das Gassacksystem soll bei dieser Anordnung vom Insassen wegbewegt sein, bevor sich der Gassack entfaltet und die Gassackabdeckung geöffnet wird. Es ist jedoch nicht auszuschließen, daß der Entfaltungsvorgang des Gassackes vor Abschluß des Bewegungsvorganges soweit fortgeschritten ist, daß sich die Gassackabdeckung öffnet, bevor der erforderliche Mindestabstand zwischen dem gefalteten Gassack und dem Insassen erreicht ist.

Der Erfindung liegt deshalb die Aufgabe zugrunde, die Verletzungsgefahr für den Insassen durch eine Airbageinheit weiter zu verringern.

Erfindungsgemäß wird das gemäß den Merkmalen des Anspruchs 1 erreicht.

Bei einem Verfahren zur Sicherung eines Fahrzeuginsassen, wobei im Crashfall ein Gassack eines Airbagmoduls zwischen dem Insassen und Fahrzeugteilen aufgeblasen wird, ist erfindungsgemäß vorgesehen, daß vor dem Aufblasen des Gassackes zumindest die Gassackabdeckung vom Insassen wegbewegt wird. In einer bevorzugten Ausführungsform ist vorgesehen, daß zusammen mit der Gassackabdeckung der Gassack und ein zwischen einer Aufblasvorrichtung und dem Gassack befindlicher Diffusor vom Insassen wegbewegt werden. Das Wegbewegen kann durch verschieben, verdrehen oder Kippen erfolgen. Mit dieser Verfahrensweise wird erreicht, daß vor dem Öffnen des Gassackes bereits ein Spalt zwischen der verschobenen Gassackabdeckung und den angrenzenden festen Fahrzeugteilen erzeugt wird, durch den sich anschließend der Gassack nach dem Aufreißen der Gassackabdeckung zusätzlich frei entfalten kann. Dadurch wird erreicht, daß sich der Gassack zunächst seitlich entfaltet und erst anschließend in Richtung des Insassen. Weiterhin besteht der Vorteil, daß wegen der größeren Entfernung der Gassackabdeckung zum Insassen vor der Gassackentfaltung die Gefahr der Verletzung durch die sich öffnende Gassackabdekcung insbesondere im Oop-Fall verringert wird.

Ein Airbagmodul mit einer Aufblasvorrichtung, einem Diffusor, einem Gassack und einer Gassackabdeckung ist erfindungsgemäß dadurch gekennzeichnet, daß der Diffusor, der Gassack und die Gassackabdeckung aus einer Ruheposition vom Insassen wegbewegbar sind, und daß der Austrittsweg der Druckgase der Aufblasvorrichtung in den Gassack erst nach Verschiebung der genannten Baugruppen in eine vorbestimmte Postion freigegeben ist.

In einer bevorzugten Ausführungsform ist erfindungsgemäß die Aufblasvorrichtung mit dem Diffusor als Kolben-Zylinder-Anordnung in der Art eines pneumatischen Differentialzylinders ausgebildet, wobei der Diffusor als Zylinder unter dem Einfluß des aus der Aufblasvorrichtung ausströmenden Gases zusammen mit dem Gassack und der Gassackabdeckung vom Insassen weg bewegbar ist und die Abströmöffnungen des Diffusors im wesentlichen erst nach Erreichen seiner weitest entfernten Stellung vom Insassen für den Austritt des Gases in den Gassack durch den Kolben freigegeben werden.

Bei dieser Anordnung wird also der Diffusor mit dem Gassack und der Gassackabdeckung unter dem Einfluß des aus der Aufblasvorrichtung ausströmenden Gases vom Insassen wegbewegt, wobei das Gas zunächst nicht in den Gassack einströmen kann. Dadurch kann sich auch die Gassackabdeckung zunächst nicht öffnen. Erst nachdem der Diffusor zumindest nahezu seine am weitesten vom Insassen entfernte Stellung erreicht hat, kann über die Abströmöffnungen des Diffusors Gas in den Gassack einströmen, so daß sich dieser entfalten kann, wodurch auch die Gassackabdeckung geöffnet wird.

Dadurch wird erreicht, daß bei Öffnung der Gassackabdeckkappe zwischen dieser und dem Insassen immer ein Mindestabstand besteht, der es dem Gassack ermöglicht, sich vor dem Insassen zu entfalten. Unter Oop-Bedingungen werden dadurch die Insassenbelastungen durch die aufreißende Kappe und den entfaltenden Airbag reduziert. Diese wesentliche Funktion wird unter allen Bedingungen zwangsläufig ausgeführt. Eine Steuerung oder Stufung der Gasgeneratorleistung für Oop-Bedingungen kann daher unter Umständen entfallen.

Die Leistungsfähigkeit des Airbags im Insassenschutzsystem wird hierdurch grundsätzlich nicht beeinflußt.

Es ist zweckmäßig, daß die Aufblasvorrichtung fest angeordnet ist und einen als Kolben ausgebildeten Abschnitt aufweist, wobei die Abströmöffnungen der Aufblasvorrichtung auf der dem Insassen abgewandten Seite des Kolbens vorgesehen sind, daß der Diffusor als dem Kolben zugeordneter Zylinder mit seitlichen Abströmöfnungen versehen ist, der auf der dem Insassen abgekehrten Seite des Kolbens eine entgegen dem Insassen mit Druckgas beaufschlagbare Fläche aufweist, wobei sich der Zylinder in der Ruhelage beidseitig des Kolbens so erstreckt, daß die Abströmöffnungen des Diffusors auf der dem Insassen zugekehrten Seite des Kolbens liegen.

In einer ersten Ausführungsform ist ein in der Lenkspindel integrierter Gasgenerator vorgesehen. Am oberen Ende der hohlen Lenkspindel ist eine mit einem Durchbruch versehene Mutter befestigt, an der der Kolben vorgesehen ist, und die Mutter weist zwischen dem Kolben und ihrer Befestigungsstelle an der Lenkspindel einen zylindrischen Abschnitt, der dem Verschiebeweg des Diffusors entspricht, sowie Abströmöffnungen auf, wobei der Durchmesser des Kolbens größer ist als der des zylindrischen Abschnitts. Die Mutter mit dem zylindrischen Abschnitt stellt somit die Kolbenstange dar.

In einer zweiten Ausführungsform ist ein topfförmiger Gasgenerator vorgesehen, der an einem Ende, das dem Insassen zugekehrt ist, einen plattenförmigen Kolben mit einem größeren Durchmesser als der Gasgenerator aufweist. In diesem Fall stellt also der Gasgenerator die Kolbenstange dar.

Der Diffusor ist zweckmäßig an einer Grundplatte befestigt, die am zylindrischen Abschnitt der Mutter anliegt, und mit ihrem Außenrand an einem senkrecht verlaufenden Rand einer Gassackabdeckung anliegt und mit diesem durch ein Sicherungsblech verrastet ist. Die Grundplatte gleitet also beim Verschieben des Diffusors am Gasgenerator oder am zylindrischen Abschnitt der Mutter, so daß das Gas dort nicht oder nur in geringem Maße entweichen kann. Infolge der Verrastung der Gassackabdeckung mit der Grundplatte ist die Gassackabdeckung zusammen mit dem Diffusor vom Insassen wegbewegbar.

In einer weiteren Ausführungsform ist der Diffusor an einem Trägerblech befestigt, das mit einem senkrechten Rand einer Gassackabdeckung mittels eines Sicherungsbleches verrastet ist.

Es ist weiterhin zweckmäßig, daß der Diffusor im Ruhezustand in einem selbsttragenden gefalteten Gassack angeordnet ist.

Zur Erzielung einer verbesserten Abdichtung und Gleitfähigkeit sowie zur Reduzierung bzw. Vermeidung der Geräuschbildung im Fahrbetrieb der gegeneinander verschiebaren Teile ist in einer weiteren Ausgestaltung zwischen dem Kolben und dem Diffusor sowie zwischen dem Gasgenerator und dem Trägerblech ein Dicht- und Gleitelement vorgesehen, das insbesondere aus Kunststoff besteht.

Zur sicheren Haltung des Diffusors in seinen Endlagen, ist es zweckmäßig dort formschlüssige Halterungen vorzusehen.

In einer Ausführungform einer formschlüssigen Halterung ist vorgesehen, daß der zylindrische Abschnitt bzw. der Gasgenerator im mittleren Bereich einen Bund aufweisen, der einen vergrößerten Durchmesser hat, und daß diesem Bund ein elastisch verformbarer Innenrand des Diffusorträgers zugeordnet ist.

Das Airbagmodul muß in seiner Ausgangslage gegen axiale Verschiebung unter normalen Bedingungen gesichert sein. Es darf nicht durch vom Fahrer auf dieses übertragene Kräfte (z.B. durch Betätigung der Hupe) verschoben werden. Es ist aber zweckmäßig, daß bei Kopfaufprall infolge einer Kollision mit einer Fahrzeugverzögerung unterhalb der Airbag-Auslöseschwelle der bei der erfindungsgemäßen Lösung verfügbare Rückzugsweg zur Reduzierung der Insassenbelastung genutzt wird. Das ist möglich, indem die Rückwärtsbeschleunigung des Airbagmoduls infolge des Kopfaufpralls über eine definierte Kraft/Weg-Kennung (Energieabsorption) über dem Rückzugsweg gesteuert wird, wodurch die Kopfbelastung reduziert wird. Zum Halten des Airbagmoduls in der Ausgangslage und über den gesamten Rückzugsweg steht eine definierte Gegenkraft zur Verfügung.

Zur Reduzierung der Insassenbelastung bei Kopfaufprall kann der Diffusor deformierbar ausgeführt sein oder das gesamte Airbagmodul energieabsorbierend gelagert sein, indem Deformationselemente vorgesehen sind. Bei Airbagauslösung wird diese Gegenkraft vom Rückzugsmechanismus überwunden.

In einer weiteren Ausführungsform ist vorgesehen, daß die Aufblasvorrichtung auf einem Distanzstück montiert ist, das auf der Lenkradnabe befestigt ist. In dieser Ausführungsform ist vorgesehen, daß zwischen dem Distanzstück und einem mit dem Diffusor verbundenen Sicherungsblech ein Dichtungselement vorgesehen ist.

Die Erfindung soll in Ausführungsbeispielen anhand von Zeichnungen erläutert werden. Es zeigen:
- Fig. 1: einen Schnitt durch ein Fahrerairbagmodul mit in der Lenksäule integriertem Gasgenerator zu Beginn der Zündung des Gasgenerators mit dem Diffusor in der Ausgangslage;
- Fig. 2: einen Schnitt durch das Fahrerairbagmodul nach Fig. 1 nach Verschiebung des Diffusors in seine Endlage;
- Fig. 3: einen Schnitt durch ein Airbagmodul nach Fig. 1 mit energieabsorbierender Lagerung;
- Fig. 4: das Airbagmodul gemäß Fig. 3 nach Verschiebung des Diffusors in seine Endlage;
- Fig. 5: einen Schnitt durch ein Airbagmodul mit Topfgenerator für die Fahrerseite mit dem Diffusor in der Ausgangslage;
- Fig. 6: Das Airbagmodul gemäß Fig. 5 nach Verschiebung des Diffusors in seine Endlage;
- Fig. 7: einen Schnitt durch ein Airbagmodul in einem Lenkrad, bei dem die Gassackabdeckung und der Lenkradkranz eine Einheit bilden, in der Ausgangslage des Diffusors;
- Fig. 8: das Airbagmodul gemäß Fig. 7 nach Verschiebung des Diffusors in seine Endlage;
- Fig. 9: ein Ausführungsbeispiel, bei dem der Gasgenerator über ein Zwischenstück mit dem Lenkrad verbunden ist;
- Fig. 10: einen Schnitt durch ein Beifahrer-Airbagmodul mit dem Diffusor in der Ausgangslage;
- Fig. 11: eine vergrößerte Einzelheit z aus dem Diffusor nach Fig. 10.

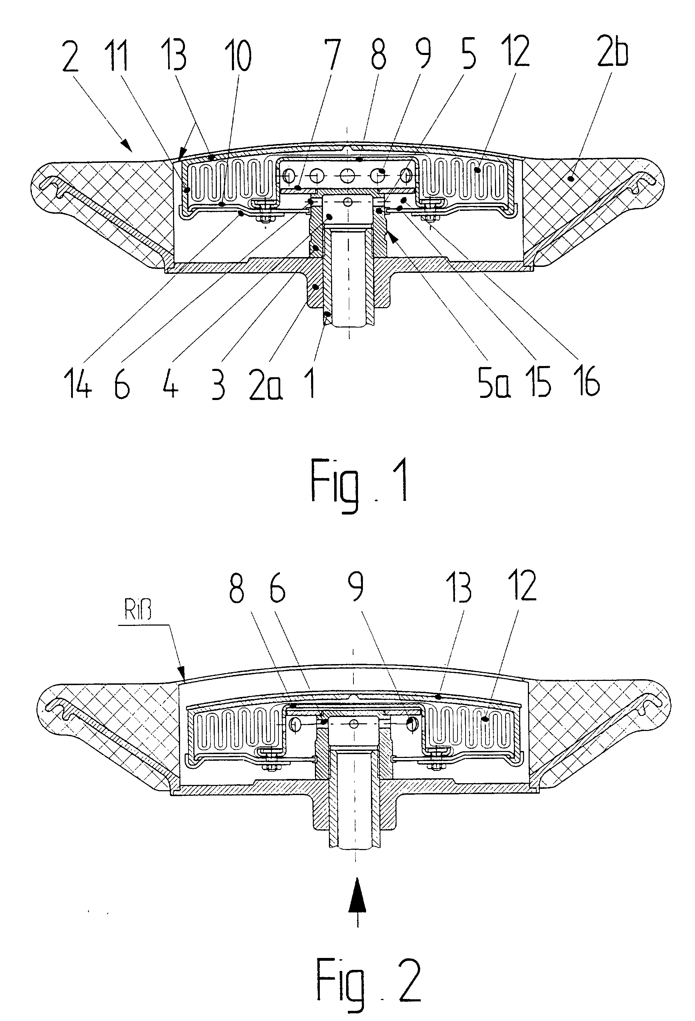

Im Ausführungsbeispiel der Fig. 1 ist eine Lenkspindel 1 mit einem integrierten Gasgenerator vorgesehen, der in der Figur nicht dargestellt ist. Auf der Lenkspindel 1 sitzt ein zweiteiliges Lenkrad 2, das eine Nabe 2a und einen Lenkradkranz 2b aufweist. Die Lenkradnabe 2a ist mittels einer Mutter 3 auf der Lenkspindel befestigt. Die Mutter 3 ist in besonderer Weise gestaltet. Sie weist eine Bohrung 4 auf, um den Durchtritt des Gases aus dem in der Lenkspindel integrierten Gasgenerator zu ermöglichen. Weiterhin weist sie einen zylindrischen Abschnitt 5 mit radialen Bohrungen 6 für den Austritt des Gases aus der Mutter auf. Der zylindrische Abschnitt 5 ist in der Mitte mit einem Bund 5a versehen, der einen größeren Durchmesser als der darüber und darunter liegende Teil des Abschnitts 5 aufweist. Am oberen Ende ist die Mutter 3 mit einem flachen Kolben 7 versehen. Dieser und die Mutter stellen aus Montagegründen vorzugsweise getrennte Bauteile dar, die z.B. miteinander verschraubbar sind, indem die Mutter an ihrem oberen Ende mit einem Außengewinde versehen ist und der Kolben 7 ein entsprechendes Innengewinde aufweist.

Der Kolben 7 ist von einem Diffusor 8 als Zylinder umgeben, der an seinem Umfang Abströmöffnungen 9 aufweist. Der Diffusor 8 ist an einer Grundplatte 10 befestigt, die einerseits am zylindrischen Abschnitt 5 anliegt und andererseits an einem inneren Randteil 11 einer Gassackabdeckung 13 anliegt. An der Grundplatte ist auch der Gassack 12 befestigt, der im vorliegenden Ausführungsbeispiel neben dem Diffusor gefaltet ist. Die Gassackabdeckung erstreckt sich über dem Diffusor 8 und dem Gassack 12. Weiterhin ist ein Sicherungsblech 14 vorgesehen, das die formschlüssige Verbindung zwischen dem Randteil 11 und der Grundplatte 10 gewährleistet. Damit wird auch der Diffusor 8 in der in Fig. 1 dargestellten Ausgangsposition gehalten.

Zwischen der Wand des Diffusors 8 und dem zylindrischen Abschnitt 5 der Mutter 3 erstreckt sich als Abschnitt der Grundplatte 10 eine ringförmige Fläche 15. Da der Kolben 7 einen größeren Durchmesser als der zylindrische Abschnitt 5 aufweist, ist zwischen diesem und dem Diffusor 8 einerseits und dem Kolben 7 und der ringförmigen Fläche 15 andererseits ein Raum 16 vorhanden.

In der Ausgangslage, d.h. vor der Zündung des Gasgenerators, liegt der innere Rand der Grundplatte 10, der elastisch verformbar ist, oberhalb des Bundes 5a am zylindrichen Abschnitt 5 an. Der Bund verhindert zusammen mit der Befestigung der Grundplatte an der Gassackabdeckung, daß das Airbagmodul durch Aufbringen geringer Kräfte auf die Gassackabdeckung vom Insassen wegbewegt wird.

Nach der Zündung des Gasgenerators im Crashfall gelangt das Gas über die radialen Bohrungen 6 in den Raum 16. Infolge des Gasdrucks auf die ringförmige Fläche 15 wird die Fixierung des Airbagmoduls überwunden und das gesamte Airbagmodul mit dem Diffusor 8, dem Gassack 12 und der Gassackabdeckung nach unten verschoben. Dabei kann zunächst kein Gas aus dem Raum 16 in den Gassack 12 gelangen, da die radialen Bohrungen 6 unterhalb des Kolbens 7 liegen, während die Abströmöffnungen 9 des Diffusors 8 oberhalb des Kolbens 7 liegen. Die Verschiebung ist möglich, da der Druck oberhalb des Kolbens 7 im Raum zwischen diesem und dem Diffusor 8 geringer ist als der Druck im Raum 16.

Der Diffusor 8, der Gassack 12 und die Gassackabdeckung 13 werden auf diese Weise vom Insassen weg bewegt. Da im vorliegenden Ausführungsbeispiel ein Lenkrad mit sogenanntem "seamless design" verwendet wird, bei dem die Gassackabdeckung 13 und das Lenkrad einteilig ausgeführt sind, reißt die Gassackabdeckung 13 bei der Rückbewegung des Airbagmoduls am Rand, der als Sollbruchstelle ausgebildet ist, ab, wie es in Fig. 2 dargestellt ist. Die Abströmöffnungen 9 des Diffusors überfahren bei dessen Bewegung den Kolben. Erst unmittelbar bevor der Diffusor 8 seine untere Endstellung erreicht hat, die durch dessen Auflage auf dem Kolben 7 bestimmt ist, liegen die Abströmöffnungen 9 ebenfalls unterhalb des Kolbens 7, so daß das Gas nunmehr in den Gassack 12 einströmen kann (Fig. 2), was zur Folge hat, daß auch die Gassackabdeckung geöffnet wird. In dieser unteren Stellung befindet sich der innere Rand der Grundplatte 10 unterhalb des Bundes 5a. Der während der Verschiebung im Bereich des Bundes verformte innere Rand der Grundplatte 10 nimmt nach der Überwindung des Bundes wieder seine ursprüngliche Form an. Damit ist gesichert, daß das Airbagmodul in der unteren Stellung bleibt.

Mit diesem Airbagmodul wird erreicht, daß die Gassackentfaltung und das Öffnen des Airbagmoduls erst nach der Rückzugsbewegung des Diffusors und des Gassacks erfolgen, so daß zwischen dem Insassen und dem Airbagmodul bzw. der Gassackabdeckung immer ein Mindestabstand besteht. Für diesen Rückzug sind keine zusätzlichen Antriebe und keine Steuerungstechnik erforderlich. Die Rückzugskraft kann über die ringförmige Fläche und über die Maße der Spalte zwischen dem Kolben 7 und dem Diffusor 8 eingestellt werden.

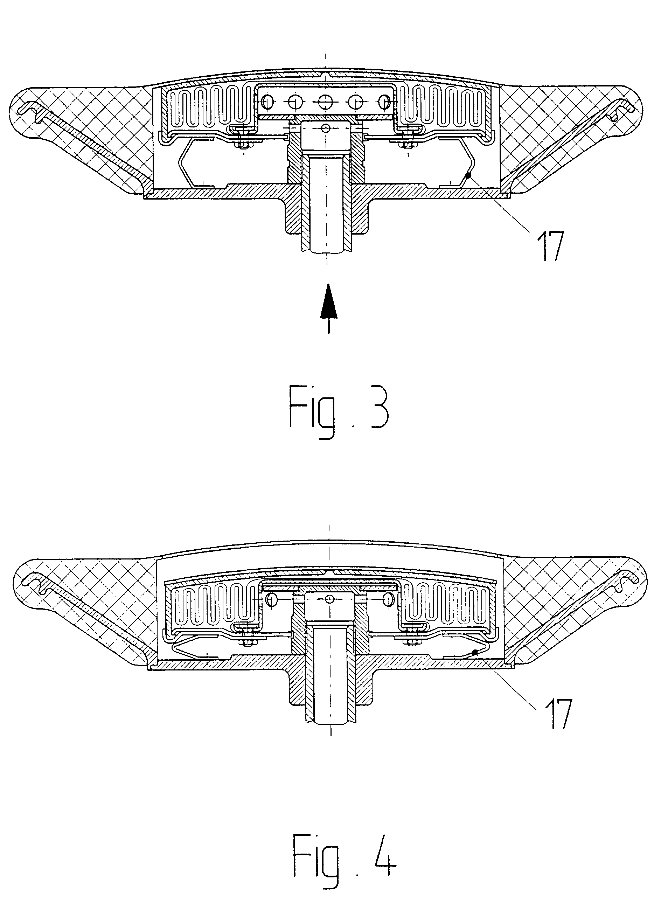

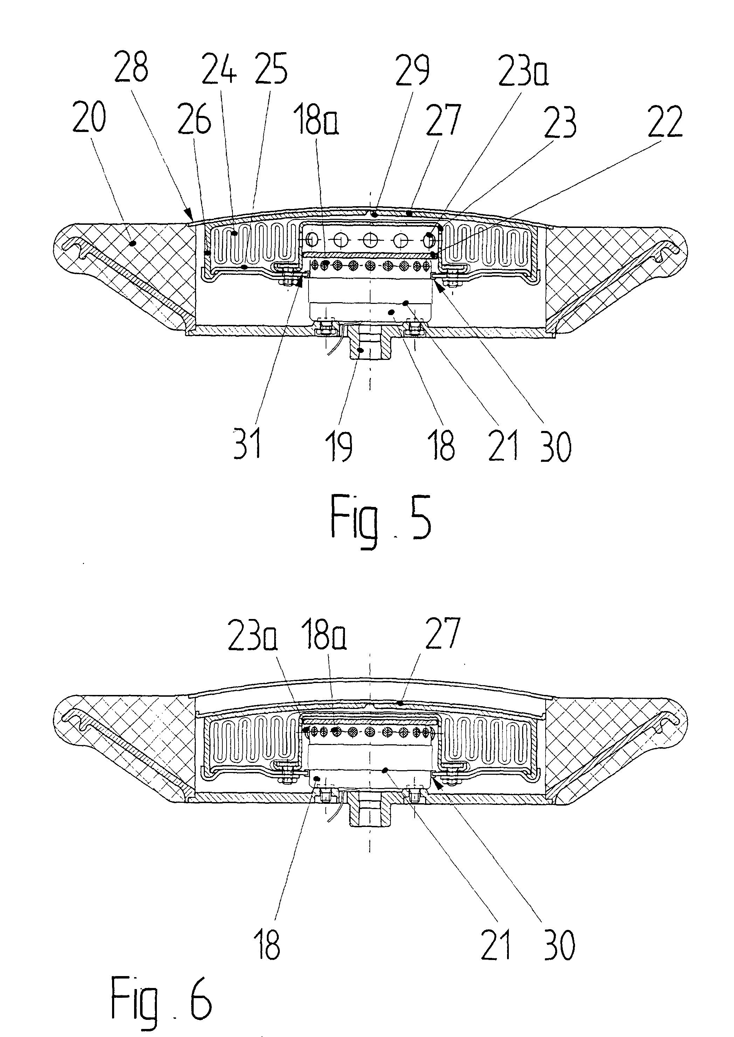

Das Ausführungsbeispiel der Figuren 3 und 4 zeigt den gleichen Grundaufbau wie das Ausführungsbeispiel der Figuren 1 und 2. Der Unterschied besteht in der Art der Fixierung des Airbagmoduls in der Ausgangs- und Endlage. Der Airbagmodul ist bei dieser Ausführungsform auf plastisch verformbaren Deformationselementen 17 in Form von Biegeblechen angeordnet. Auch diese gewährleisten, daß sich das Airbagmodul durch geringe Kräfte unterhalb der für den Kopfaufprall notwendigen Rückhaltekraft, wie z.B. durch die Hupenbetätigung, nicht verschieben läßt. Nach Zündung des Gasgenerators wird das Airbagmodul aus der in Fig. 3 dargestellten Position infolge der Deformation der Deformationselemente 17 in die in Fig. 4 dargestellte Position verschoben.

Im Ausführungsbeispiel der Fig. 5 ist ein Fahrerairbagmodul mit einem topfförmigen Gasgenerator 18 dargestellt, der auf der Lenkradnabe 19 eines Lenkrades 20 befestigt ist und Abströmöffnungen 18a aufweist. Der Gasgenerator 18 ist zylindrisch, weist eine glatte Oberfläche auf und stellt die Kolbenstange dar. Der Gasgenerator 18 ist in seinem mittleren Bereich mit einem Bund 21 versehen, der die gleiche Funktion wie der Bund 5a im vorhergehenden Ausführungsbeispiel hat.

Auf der Oberseite des Gasgenerators ist ein Blech 22 angebracht, das den Kolben bildet. Als Zylinder ist ein Diffusor 23 vorgesehen, der in einem selbsttragenden, neben diesem gefalteten Gassack 24 angeordnet ist, wobei beide an einem Trägerblech 25 fest montiert sind. Der Diffusor weist Abströmöffnungen 23a auf. Weiterhin ist das Trägerblech 25 mit einem inneren Teil 26 einer Gassackabdeckung 27 verrastet, die den Gassack seitlich und oben abdeckt. Die Gassackabdeckung 27 ist am Rand formschlüssig in das Lenkrad 20 eingedrückt und weist dort einen biegsamen Bereich 28 auf. Weiterhin ist in der Mitte der Gassackabdeckung eine Aufreißnaht 29 als Sollbruchstelle für die Airbagentfaltung vorhanden. Das Trägerblech 25 ist ringförmig und weist am Innenrand ein elastisch verformbares Kunststoffteil 30 auf, daß am Gasgenerator 18 anliegt. Die Verwendung des Kunststoffteils ist zweckmäßig, da dieses die Gleitfähigkeit und Abdichtung zwischen dem Trägerblech und dem Gasgenerator bei der Verschiebung des Airbagmoduls verbessert und zur Geräuschdämmung beiträgt, indem z.B. Klappergeräusche infolge von Fahrzeugvibrationen an der Schnittstelle Diffusor - Gasgenerator verringert werden. Ein gleichartiges Kunststoffteil kann auch am Rand des Bleches 22 zur Verbesserung der Gleitfähigkeit und Abdichtung gegenüber dem Diffusor 23 vorgesehen sein.

Die zwischen dem Gasgenerator 18 und der Seitenwand des Diffusors 23 liegende Fläche 31 des Trägerblechs 25 entspricht der Fläche 15 des ersten Ausführungsbeispiels, die dem Druck des aus dem Gasgenerator ausstörmenden Gases ausgesetzt ist und die Abwärtsbewegung des Diffusors bewirkt.

Die Wirkungsweise entspricht der des Ausführungsbeispiels der Figuren 1 und 2. Bei der in der Fig. 5 dargestellten Ausgangslage liegt das Kunststoffteil 30 oberhalb des Bundes 21 am Gasgenerator an, wodurch das Airbagmodul auch bei geringer Krafteinwirkung in seiner oberen Lage fixiert bleibt.

Bei der Abwärtsbewegung des Airbagmoduls wird der biegsame Bereich 28 der Gassackabdeckung 27 verformt, so daß sich die Gassackabdeckung ohne Beschädigung der Aufreißnaht 29 mit dem Airbagmodul abwärts bewegen kann. Nach Beendigung der Abwärtsbewegung des Airbagmoduls liegt das Kunststoffteil 30 unterhalb des Bundes 21 am Gasgenerator 18 an, wodurch eine Rückbewegung des Airbagmoduls verhindert wird.

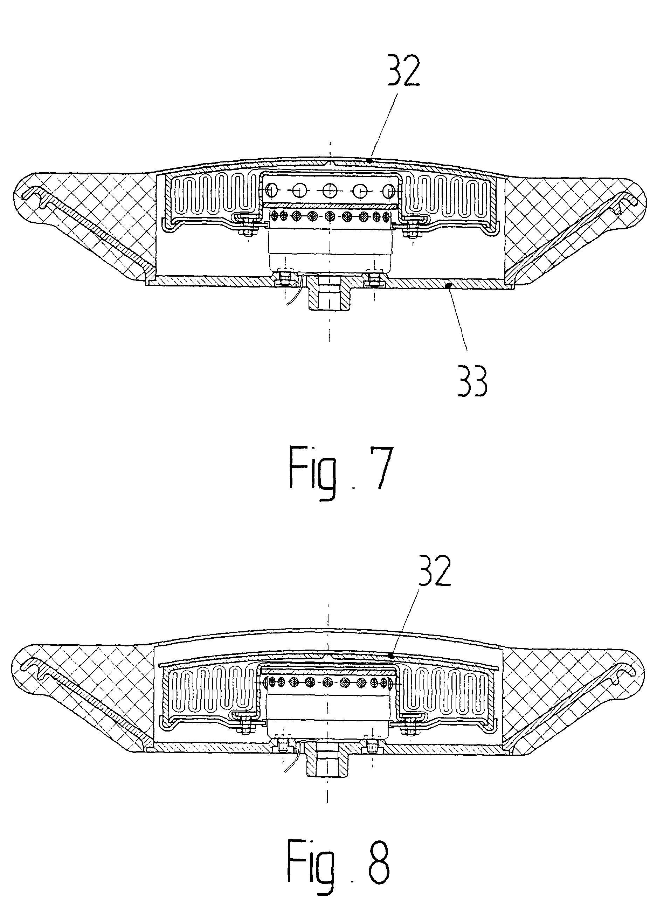

Das Ausführungsbeispiel der Figuren 7 und 8 unterscheidet sich von dem der Figuren 5 und 6 dadurch, daß die Gassackabdeckung 32 und das Lenkrad wie beim Ausführungsbeispiel der Figuren 1 und 2 aus einem Stück bestehen, wobei das Lenkrad zweiteilig ausgeführt ist, indem die Lenkradnabe 33 ein gesondertes Teil darstellt.

Der mögliche Rückzugsweg ist abhängig von dem im Lenkrad verfügbaren Platz und der konstruktiven Lösung im Detail, z.B. vom Typ des Gasgenerators.

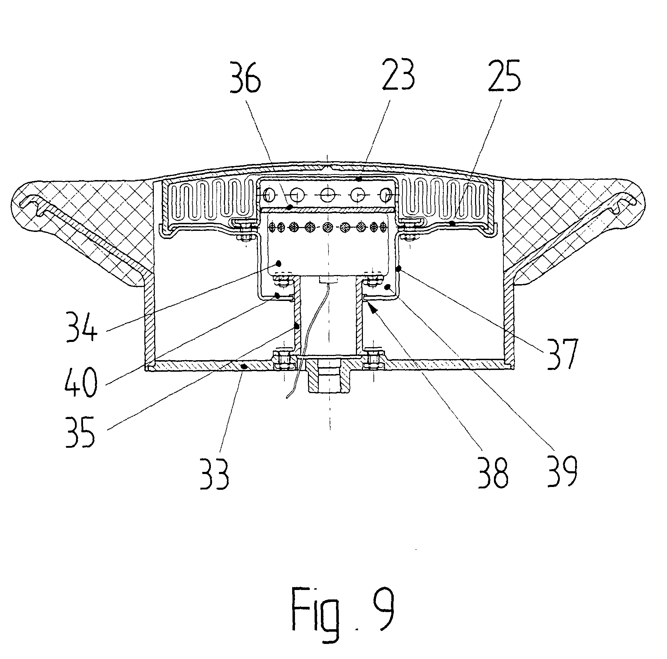

Beim Ausführungsbeispiel der Fig. 9 ist abweichend zum Ausführungsbeispiel der Figuren 7 und 8 ein Gasgenerator 34 vorgesehen, der auf einem zylindrichen Distanzstück 35 befestigt ist, das einen geringeren Durchmesser als der Gasgenerator aufweist und an der Lenkradnabe 33 befestigt ist. Am Gasgenerator 34 ist ein Blech 36 als Kolben vorgesehen, dessen Rand am Diffusor 23 anliegt. Weiterhin ist ein winkelförmiges Sicherungsblech 37 vorgesehen, das mit dem Trägerblech 25 verbunden ist und das ein Kunststoffteil 38 aufweist, das an der zylindrischen Wand des Distanzstückes 35 anliegt.

Die Funktionsweise entspricht der der vorhergenden Ausführungsbeispiele. Der zusätzliche Vorteil besteht darin, daß ein vergrößerter Druckraum 39 vorhanden ist. Dadurch wird der Gasstrom aus dem Gasgenerator in geringerem Maße behindert und es steht eine größere Ringfläche 40 zur Verfügung. Infolge der größeren Ringfläche sind größere Rückzugskräfte vorhanden bzw. geringere Drücke erforderlich, wodurch sich die Rückzugsgeschwindigkeit des Airbagmoduls ebenfalls erhöht. Damit verkürzt sich auch die Zeit bis zum Eintreten des Gases in den Gassack.

Das Distanzstück ermöglicht auch eine einfache Anpassung an unterschiedliche Airbagmodule durch Veränderung des Durchmessers der zylindrichen Lauffläche des Distanzstükkes.

Ein weiterer Vorteil besteht darin, daß die Anlageflächen des Bleches 36 am Diffusor und des Kunststoffteils 38 am Distanzstück weiter auseinanderliegen als die entsprechenden Stützstellen der vorhergehenden Ausführungsbeispiele. Das wirkt sich positiv auf den Bewegungsablauf des Airbagmoduls aus.

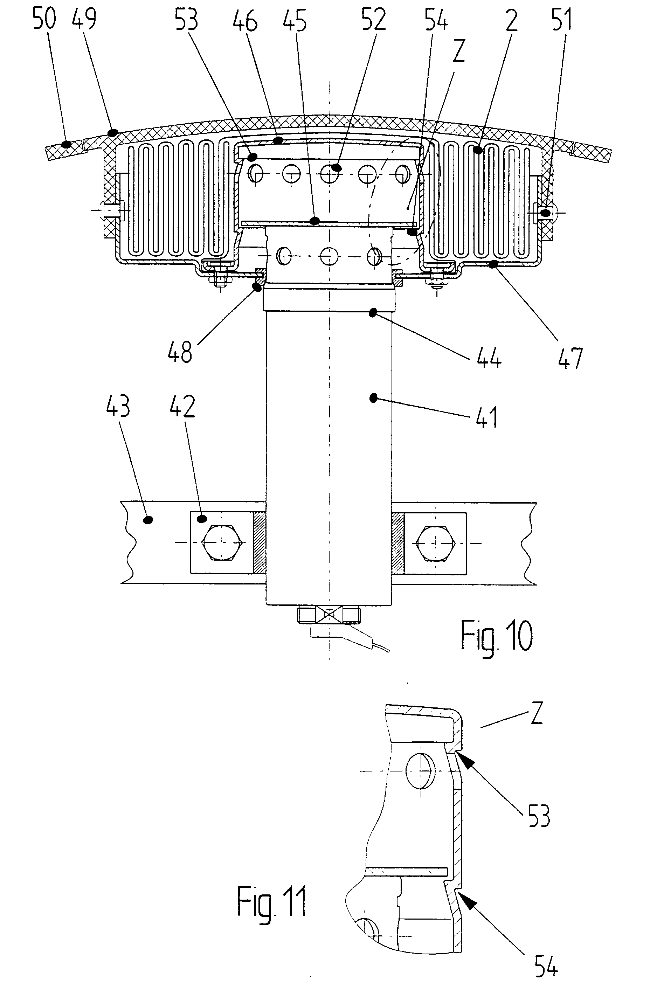

In der Fig. 10 ist ein Ausführungsbeispiel für einen Beifahrer-Airbag dargestellt. Es ist ein zylindrischer Gasgenerator 41 vorgesehen, der mittels einer Generatorbefestigung 42 an einem Querträger 43 angebracht ist. Der Gasgenerator 41 ist mit einem Bund 44 versehen, der einen größeren Durchmesser als die übrigen Abschnitte des Gasgenerators aufweist. Am oberen Ende des Gasgenerators ist ein flacher Kolben 45 befestigt, dessen Durchmesser wie in den vorhergehenden Ausführungsbeispielen größer ist als der des Gasgenerators. Der Kolben ist von einem Diffusor 46 umgeben, der an einem Trägerblech 47 befestigt ist. Das Trägerblech umgibt den Gasgenerator 41 und liegt an diesem unter Zwischenlage eines Kunststoffringes 48 an. Am Außenrand des Trägerbleches 47 ist eine Gassackabdeckung 49 z. B. mittels Blindnieten 51 befestigt. Die Gassackabdeckung 49 verläuft bündig mit der Armaturentafel 50.

Wie aus der Fig. 11 ersichtlich ist, weist der Diffusor oberhalb und unterhalb seiner Abströmöffnungen 52 umlaufende Sicken 53 bzw. 54 auf, die zur Fixierung des Diffusors in der Ausgangs- und Endlage dienen. In der in Fig. 10 dargestellten Ausgangslage wird der Diffusor einerseits durch das oberhalb des Bundes 44 anliegende Kunststoffteil 48 in entgegengesetzter Richtung des Insassen fixiert und andererseits durch die hinter den Kolben 45 greifende Sicke 54 in Richtung des Insassen fixiert.

Die Funktionsweise nach Zündung des Gasgenerators entspricht der bei den vorhergehenden Ausführungsbeispielen. Bei der Bewegung des Diffusors mit dem Gassack und der Gassackabdeckung vom Insassen weg werden der Kunststoffring 48 und der nach innen ragende Teil der Sicke 53 beim Überfahren des Bundes 44 bzw des Kolbenrandes elastisch verformt. In der Endlage, in der der Diffusor 46 auf dem Kolben 45 aufliegt, greift die Sicke 53 unter den Kolben 45 und verhindert so die Rückbewegung des Diffusors und der mit ihm verbundenen Teile.

## Patentansprüche

1. Verfahren zur Sicherung eines Fahrzeuginsassen, wobei im Crashfall ein Gassack eines Airbagmoduls zwischen dem Insassen und Fahrzeugteilen aufgeblasen wird, wobei zumindest die Gassackabdeckung (13) durch die aus einer Aufblasvorrichtung austretenden Gase vor dem Aufblasen des Gassackes (12) vom Insassen wegbewegt wird,
**dadurch gekennzeichnet,**
daß der Eintritt der Gase in den Gassack (12) erst freigegeben wird, nachdem die Gassackabdeckung (13) bis zu einer vorbestimmten Position bewegt worden ist.

2. Verfahren nach Anspruch 1, **dadurch gekennzeichnet,** daß zusammen mit der Gassackabdeckung (**13**) der Gassack (**12**) und ein zwischen einer Aufblasvorrichtung und dem Gassack (**12**) befindlicher Diffusor (**8**) vom Insassen wegbewegt werden.

3. Airbagmodul mit einer Aufblasvorrichtung, einem Diffusor (8), einem Gassack (12) und einer Gassackabdeckung (13), insbesondere zur Durchführung des Verfahrens nach Anspruch 1 oder 2, **dadurch gekennzeichnet,** daß der Diffusor (8), der Gassack (12) und die Gassackabdeckung (13) aus einer Ruheposition vom Insassen wegbewegbar sind, und daß der Austrittsweg der Druckgase der Aufblasvorrichtung in den Gassack (**12**) erst nach Verschiebung der genannten Baugruppen in eine vorbestimmte Postion freigegeben ist.

4. Airbagmodul nach Anspruch 3, **dadurch gekennzeichnet,** daß die Aufblasvorrichtung mit dem Diffusor (8, 23) als Kolben-Zylinder-Anordnung in der Art eines pneumatischen Differentialzylinders ausgebildet ist, wobei der Diffusor (8, 23) als Zylinder unter dem Einfluß des aus der Aufblasvorrichtung ausströmenden Gases zusammen mit dem Gassack und der Gassackabdeckung vom Insassen weg bewegbar ist und die Ausströmöffnungen (9, 23a) des Diffusors (8, 23) im wesentlichen erst nach Erreichen seiner weitest entfernten Stellung vom Insassen für den Austritt des Gases in den Gassack freigegeben sind.

5. Airbagmodul nach Anspruch 3 oder 4 , **dadurch gekennzeichnet,** daß die Aufblasvorrichtung fest angeordnet ist und einen als Kolben (7, 22) ausgebildeten Abschnitt aufweist, wobei die Abströmöffnungen (6, 18a) der Aufblasvorrichtung auf der dem Insassen abgewandten Seite des Kolbens (7, 22) vorgesehen sind, daß der Diffusor (8, 23) als dem Kolben (7, 22) zugeordneter Zylinder mit seitlichen Abströmöfnungen (9, 23a) versehen ist, der auf der dem Insassen abgekehrten Seite des Kolbens eine entgegen dem Insassen mit Druckgas beaufschlagbare Fläche (15, 31) aufweist, wobei sich der Diffusor in der Ruhelage beidseitig des Kolbens (7, 22) so erstreckt, daß die Abströmöffnungen (9, 23a) des Diffusors auf der dem Insassen zugekehrten Seite des Kolbens liegen.

6. Airbagmodul nach mindestens einem der vorhergehenden Ansprüche, **dadurch gekennzeichnet,** daß ein in **einer** Lenkspindel (1) integrierter Gasgenerator vorgesehen ist, daß am oberen Ende der hohlen Lenkspindel (1) eine mit einem Durchbruch (4) versehene Mutter (3) befestigt ist, an der der Kolben (7) vorgesehen ist, und daß die Mutter (3) zwischen dem Kolben (7) und ihrer Befestigungsstelle an der Lenkspindel (1) einen zylindrischen Abschnitt (5), der dem Verschiebeweg des Diffusors (8) entspricht, sowie die Abströmöffnungen (6) aufweist, wobei der Durchmesser des Kolbens (7) größer ist als der des zylindrischen Abschnitts (5).

7. Airbagmodul nach mindestens einem der Ansprüche 3 bis 5, **dadurch gekennzeichnet,** daß ein topfförmiger Gasgenerator (18) vorgesehen ist, der an einem Ende, das dem Insassen zugekehrt ist, einen plattenförmigen Kolben (22) mit einem größeren Durchmesser als der Gasgenerator (18) aufweist.

8. Airbagmodul nach mindestens einem der vorhergehenden Ansprüche, **dadurch gekennzeichnet,** daß der Diffusor (8) an einer Grundplatte (10) befestigt ist, die am zylindrischen Abschnitt (5) der Mutter (3) anliegt, und mit ihrem Außenrand an einem senkrecht verlaufenden Rand (11) einer Gassackabdeckung (13) anliegt und mit diesem durch ein Sicherungsblech (14) verrastet ist.

9. Airbagmodul nach mindestens einem der vorhergehenden Ansprüche, **dadurch gekennzeichnet,** daß der Diffusor (23) an einem Trägerblech (25) befestigt ist, das mit einem senkrechten Rand (26) einer Gassackabdeckung (27) mittels eines Sicherungsbleches (14a) verrastet ist.

10. Airbagmodul nach mindestens einem der vorhergehenden Ansprüche, **dadurch gekennzeichnet,** daß der Diffusor (8, 23) im Ruhezustand in einem selbsttragenden gefalteten Gassack (12, 24) angeordnet ist.

11. Airbagmodul nach mindestens einem der vorhergehenden Ansprüche, **dadurch gekennzeichnet,** daß zwischen dem Kolben (22) und dem Diffusor (23) sowie zwischen dem Gasgenerator (18) und dem Trägerblech (25) ein Dicht- und Gleitelement (30) vorgesehen ist.

12. Airbagmodul nach Anspruch 11, **dadurch gekennzeich**net, daß als Dicht- und Gleitelement ein Kunststoffteil (30) vorgesehen ist.

13. Airbagmodul nach mindestens einem der vorhergehenden Ansprüche, **dadurch gekennzeichnet,** daß der Diffusor in seinen Endlagen formschlüssig gehalten ist.

14. Airbagmodul nach mindestens einem der vorhergehenden Ansprüche, **dadurch gekennzeichnet,** daß der zylindrische Abschnitt (5) bzw. der Gasgenerator (18) im mittleren Bereich einen Bund (5a, 21) aufweisen, der einen vergrößerten Durchmesser hat, und daß diesem Bund ein elastisch verformbarer Innenrand des Diffusorträgers zugeordnet ist.

15. Airbagmodul nach mindestens einem der vorhergehenden Ansprüche, **dadurch gekennzeichnet,** daß der Diffusor deformierbar ausgeführt ist oder das gesamte Airbagmodul energieabsorbierend gelagert ist.

16. Airbagmodul nach mindestens einem der vorhergehenden Ansprüche, **dadurch gekennzeichnet,** daß das Airbagmodul auf einem plastisch verformbaren Deformationselement (17) befestigt ist.

17. Airbagmodul nach mindestens einem der vorhergehenden Ansprüche, **dadurch gekennzeichnet,** daß die Aufblasvorrichtung auf einem Distanzstück (35) montiert ist, das auf **einer** Lenkradnabe befestigt ist.

18. Airbagmodul nach Anspruch 17, **dadurch gekennzeichnet,** daß zwischen dem Distanzstück (35) und einem mit dem Diffusor verbundenen Sicherungsblech (37) ein Dichtungselement (38) vorgesehen ist.

## Claims

1. Method for securing a vehicle passenger wherein in the event of a crash a gas bag of an airbag module is inflated between the occupant and vehicle parts wherein at least the gas bag cover is moved away from the passenger through the gases emerging from an inflation device prior to the inflation of the gas bag,
characterised in that
the entrance of the gases into the gas bag (12) is only released after the gas bag cover (13) has been moved up to a predetermined position.

2. Method according to claim 1 characterised in that the gas bag (12) and a diffuser (8) located between an inflation device and the gas bag (12) are moved away from the passenger together with the gas bag cover (13).

3. Airbag module with an inflation device, a diffuser (8), a gas bag (12) and a gas bag cover (13), more particularly for carrying out the method according to claim 1 or 2 characterised in that the diffuser (8), the gas bag (12) and the gas bag cover (13) can be moved away from the passenger out from a rest position and that the outlet path of the compressed gases of the inflation device into the gas bag (12) is only released after the said structural groups have moved into a predetermined position.

4. Airbag module according to claim 3 **characterised in that** the inflation device with the diffuser (8, 23) is formed as a piston cylinder unit in the manner of a pneumatic differential cylinder wherein the diffuser (8, 23) as cylinder can be moved together with the gas bag and the gas bag cover away from the passenger under the influence of the gas flowing out of the inflation device and the outflow openings (9, 23a) of the diffuser (8, 23) are only released for the outlet of the gas into the gas bag after the diffuser has reached its position furthest away from the passenger.

5. Airbag module according to claim 3 or 4 **characterised in that** the inflation device is mounted fixed and has a section formed as a piston (7, 22) wherein the outflow openings (6, 18a) of the inflation device are provided on the side of the piston (7, 22) remote from the passenger, that the diffuser (8, 23) is provided as a cylinder associated with the piston (7, 22) and has side outflow openings (9, 23a) and on the side of the piston remote from the passenger a surface (156, 31) which can be biased with compressed gas against the passenger, wherein the diffuser extends in the rest position either side of the piston (7, 22) so that the outflow openings (9, 23a) of the diffuser lie on the side of the piston facing the passenger.

6. Airbag module according to at least one of the preceding claims characterised in that a gas generator is provided integrated in a steering spindle (1), that at the upper end of the hollow steering spindle (1) is a nut (3) provided with an aperture (4) whereby the piston (7) is provided on the nut, and that the nut (3) has between the piston (7) and its fastening point on the steering spindle (1) a cylindrical section (5) which corresponds to the displacement path of the diffuser (8) as well as outflow openings (6) wherein the diameter of the piston (7) is larger than that of the cylindrical section (5).

7. Airbag module according to at least one of claims 3 to 5 **characterised in that** a pot-shaped gas generator (18) is provided which has at one end facing the passenger a plate-like piston (22) with a larger diameter than the gas generator (18).

8. Airbag module according to at least one of the preceding claims **characterised in that** the diffuser (8) is fixed on a base plate (10) which adjoins the cylindrical section (5) of the nut (3) and with its outer edge adjoins a vertically aligned edge (11) of a gas bag cover (13) and is locked with this through a security plate (14).

9. Airbag module according to at least one of the preceding claims **characterised in that** the diffuser (23) is fixed on a support plate (25) which is locked with a vertical edge (26) of a gas bag cover (27) by means of a security plate (14a).

10. Airbag module according to at least one of the preceding claims **characterised in that** the diffuser (8, 23) is mounted in the rest state in a self-supporting folded gas bag (12, 24).

11. Airbag module according to at least one of the preceding claims **characterised in that** a sealing and slide element (30) is provided between the piston (22) and diffuser (23) as well as between the gas generator (18) and support plate (25).

12. Airbag module according to claim 11 **characterised in that** a plastics part (30) is provided as sealing and slide element.

13. Airbag module according to at least one of the preceding claims **characterised in that** the diffuser is held in keyed engagement in its end positions.

14. Airbag module according to at least one of the preceding claims **characterised in that** the cylindrical section (5) and gas generator (18) have in the centre area a collar (5a, 21) which has an enlarged diameter and that an elastically deformable inner edge of the diffuser support is associated with this collar.

15. Airbag module according to at least one of the preceding claims, **characterised in that** the diffuser is designed deformable or the entire airbag module is mounted energy-absorbing.

16. Airbag module according to at least one of the preceding claims **characterised in that** the airbag module is fixed on a plastically deformable deformation element.

17. Airbag module according to at least one of the preceding claims characterised in that the inflation device is mounted on a spacer member (35) which is fixed on a steering wheel hub.

18. Airbag module according to claim 17 **characterised in that** a sealing element (38) is provided between the spacer member (35) and a security plate (37) connected to the diffuser.

## Revendications

1. Procédé pour assurer la sécurité d'un passager d'un véhicule, selon lequel lors d'un crash un sac à gaz d'un module d'air-bag est gonflé entre le passager et des parties du véhicule, au moins le revêtement (13) du sac à gaz étant écarté du passager par les gaz sortant d'un dispositif de gonflage, avant le gonflage du sac à gaz (12),
caractérisé en ce
que l'introduction des gaz dans le sac à gaz (12) est libéré uniquement après que le revêtement (13) du sac à gaz a été déplacé jusque dans une position prédéterminée.

2. Procédé selon la revendication 1, caractérisé en ce que le sac à gaz (12) et un diffuseur (8) situé entre un dispositif de gonflage et le sac à gaz (12) sont écartés du passager, conjointement avec le revêtement (13) du sac à gaz.

3. Module d'air-bag comportant un dispositif de gonflage, un diffuseur (8), un sac à gaz (12) et un revêtement (13) de ce sac, notamment pour la mise en oeuvre du procédé selon la revendication 1 ou 2, caractérisé en ce que le diffuseur (8), le sac à gaz (12) et le revêtement (13) du sac à gaz peuvent être écartés du passager à partir d'une position de repos et que le trajet de sortie des gaz sous pression du dispositif de gonflage dans le sac à gaz est libéré uniquement après le déplacement des modules indiqués jusque dans une position prédéterminée.

4. Module d'air-bag selon la revendication 3, caractérisé en ce que le dispositif de gonflage équipé du diffuseur (8, 23') est agencé sous la forme d'un dispositif à piston et cylindre réalisé à la manière d'un piston pneumatique différentiel, le diffuseur (8, 23) en tant que cylindre étant déplaçable conjointement avec le sac à gaz et l'élément de revêtement du sac à gaz, à partir du passager, sous l'influence du gaz qui sort du dispositif de gonflage, et les ouvertures de sortie (9, 23a) du diffuseur (8, 23) sont libérées essentiellement uniquement après qu'une position la plus éloignée possible du passager a été atteinte pour la sortie du gaz contenu dans le sac à gaz.

5. Module d'air bag selon la revendication 3 ou 4, caractérisé en ce que le dispositif de gonflage est monté fixe et possède une partie agencée sous la forme d'un piston (7, 22), les ouvertures d'évacuation (6, 18a) du dispositif de gonflage étant prévues sur le côté du piston (7, 22) tourné à l'opposé du passager, que le diffuseur (8, 23) en tant que cylindre associé au piston (7, 22) est équipé d'ouvertures latérales d'évacuation (9, 23a), le côté du piston, tourné à l'opposé du passager, comportant une surface (15, 31) pouvant être chargée par un gaz comprimé à l'opposé du passager, le diffuseur s'étendant, dans la position de repos, des deux côtés du piston (7, 22) de sorte que les ouvertures d'évacuation (9, 23a) du diffuseur sont situées sur le côté du piston, qui est tourné vers le passager.

6. Module d'air-bag selon au moins l'une des revendications précédentes, caractérisé en ce qu'il est prévu un générateur de gaz intégré dans une colonne de direction (1), que sur l'extrémité supérieure de la colonne de direction creuse (1) est fixé un écrou (3), qui est pourvu d'un passage (4) et sur lequel est prévu le piston (7), et que l'écrou (3) comporte, entre le piston (7) et son point de fixation sur la colonne de direction (1), une partie cylindrique (5), qui correspond à la course de déplacement du diffuseur (8), ainsi que les ouvertures d'évacuation (6), le diamètre du piston (7) étant supérieur à celui de la partie cylindrique (5).

7. Module d'air-bag selon au moins l'une des revendications 3 à 5, caractérisé en ce qu'il est prévu un générateur de gaz en forme de pot (18), qui comporte, sur une extrémité tournée vers le passager, un piston en forme de plaque (22) possédant un diamètre supérieur à celui du générateur de gaz (18).

8. Module d'air-bag selon au moins l'une des revendications précédentes, caractérisé en ce que le diffuseur (8) est fixé sur une plaque de base (10), qui s'applique contre la partie cylindrique (5) de l'écrou (3), et est encliqueté, par son bord extérieur, sur un bord perpendiculaire (11) d'un revêtement (13) du sac à gaz et est encliqueté sur ce dernier, au moyen d'une tôle de fixation (14).

9. Module d'air-bag selon au moins l'une des revendications précédentes, caractérisé en ce que le diffuseur (23) est fixé sur une tôle de support (25) qui est encliquetée par un bord perpendiculaire (26) d'un élément de revêtement (27) du sac à gaz, au moyen d'une tôle de fixation (14a).

10. Module d'air-bag selon au moins l'une des revendications précédentes, caractérisé en ce que le diffuseur (8, 23) est disposé dans l'état de repos dans un sac à gaz (12, 24) autoporteur replié.

11. Module d'air-bag selon au moins l'une des revendications précédentes, caractérisé en ce qu'un élément d'étanchéité et de glissement (30) est prévu entre le piston (22) et le diffuseur (23) ainsi qu'entre le générateur de gaz (18) et la tôle de support (25).

12. Module d'air-bag selon la revendication 11, caractérisé en ce qu'une pièce en matière plastique (30) est prévue en tant qu'élément d'étanchéité et de glissement.

13. Module d'air-bag selon au moins l'une des revendications précédentes, caractérisé en ce que le diffuseur est retenu selon une liaison par formes complémentaires dans ses positions d'extrémité.

14. Module d'air-bag selon au moins l'une des revendications précédentes, caractérisé en ce que la partie cylindrique (5) et le générateur de gaz (18) comportent, dans la partie centrale, un collet (5a, 21) qui possède un diamètre accru et qu'un bord intérieur, déformable élastiquement, du support du diffuseur est associé à ce collet.

15. Module d'air-bag selon au moins l'une des revendications précédentes, caractérisé en ce que le diffuseur est agencé de manière à être déformable ou l'ensemble du module d'air-bag est monté de manière à absorber de l'énergie.

16. Module d'air-bag selon au moins l'une des revendications précédentes, caractérisé en ce que le module d'air-bag est fixé à un élément de déformation (17) déformable plastiquement.

17. Module d'air-bag selon au moins l'une des revendications précédentes, caractérisé en ce que le dispositif de gonflage est monté sur une entretoise (35), qui est fixé à un moyeu de volant.

18. Module d'air-bag selon la revendication 17, caractérisé en ce qu'un élément d'étanchéité (38) est prévu entre l'entretoise (35) et une tôle de sécurité (37) reliée au diffuseur.
